Europäisches Patentamt

European Patent Office

Office européen des brevets

(11) Veröffentlichungsnummer: 0 258 546
A1

## (12) EUROPÄISCHE PATENTANMELDUNG

(21) Anmeldenummer: 87108171.7

(22) Anmeldetag: 05.06.87

(51) Int. Cl.4: **C02F 1/52** , C02F 1/56 , C02F 1/24

(30) Priorität: 13.08.86 DE 3627407

(43) Veröffentlichungstag der Anmeldung:
09.03.88 Patentblatt 88/10

(84) Benannte Vertragsstaaten:
AT FR SE

(71) Anmelder: Sulzer-Escher Wyss GmbH
Escher Wyss-Strasse Postfach 1380
D-7980 Ravensburg(DE)

(72) Erfinder: Eisenschmid, Karl
Trollingerstrasse 18
D-7141 Grossbottwar-Winzerhausen(DE)
Erfinder: Steinbeis, Bernhard
Rieslingstrasse 23
D-7141 Bellstein(DE)

(54) Verfahren zur Reinigung von Wasserkreisläufen bei der Zellstoff-, Halbstoff- und Papierherstellung.

(57) Ein Verfahren zur Reinigung von Wasserkreisläufen bei der Zellstoff-, Halbstoff-und Papier-herstellung, insbesondere auch bei der Herstellung von Altpapier, wird beschrieben, wobei das Verfahren dadurch gekennzeichnet ist, dass neben der üblicherweise durchgeführten Flockung von im Kreislaufwasser vorliegenden suspendierten Fest-stoffteilchen eine Ausfällung von gelösten Störsubstanzen mit Hilfe anorganischer Fällungsmittel in Kombination mit einem Polyelektro-lyten vorgenommen wird, und vorzugweise die aus-gefällten und ausgeflockten Störsubstanzen mittels Entspannungsflotation abgetrennt werden.

EP 0 258 546 A1

## Verfahren zur Reinigung von Wasserkreisläufen bei der Zellstoff-, Halbstoff-und Papierherstellung

Die Erfindung betrifft ein Verfahren zur Reinigung von Wasserkreisläufen bei der Zellstoff-, Halbstoff-und Papierherstellung. Insbesondere betrifft die Erfindung ein Verfahren zur Entfernung von CSB-verursachenden Substanzen (sauerstoffzehrende Substanzen) aus den vorstehend genannten Wasserkreisläufen. Gemäss der vorliegenden Erfindung soll vor allem der biologisch nicht abbaubare CSB zu einem grossen Anteil oder vollständig aus dem Wasserkreislauf entfernt werden.

Auf dem Gebiet der Zellstoff-, Halbstoff-und Papierherstellung ist es bekannt, Störstoffe aus dem Kreislaufwasser zu entfernen, insbesondere kolloid dispergierte Substanzen organischer und anorganischer Natur. Zur Einhaltung der vielfach strengen Vorschriften zum Umweltschutz ist es unerlässlich, sauerstoffzehrende Verbindungen, insbesondere Lignine, Bindemittel, etc., die in den vorstehend genannten Branchen anfallen, aus den Wasserkreisläufen zu entfernen oder zumindest zu reduzieren.

Der chemische Sauerstoffverbrauch (CSB) ist eine Messgrösse, der die Gesamtheit der im Kreislaufwasser oder Abwasser gelösten oxidierbaren Substanzen umfasst.

Die biologische Abwasserklärung stellt zur Zeit eine wirkungsvolle Technologie zur Reduzierung des CSB dar. Die ausgeprägte Eigenschaft des Bioschlammes beruht darauf, kolloiddisperse Stoffe zur Koagulation zu bringen. Davon wird aber nur der biologisch abbaubare Kohlenstoff umfasst, während der biologisch nicht abbaubare CSB im Abwasser verbleibt.

Von den CSB-verursachenden Substanzen sind vor allem die unerwünscht, die biologisch mit Hilfe bekannter, wirtschaftlicher Verfahren nicht ohne weiteres abbaubar sind. Diese nicht biologisch abbaubaren Störfaktoren müssen entfernt bzw. reduziert werden. Man spricht in diesem Zusammenhang von dem biologisch, mit Hilfe üblicher bekannter und wirtschaftlicher Verfahren nicht abbaubaren CSB.

Der durch grobdisperse Stoffe und Kolloide verursachte CSB ist im allgemeinen durch chemisch-mechanische Reinigung zu entfernen. Anders ist dies bei den gelösten organischen Substanzen, die einen grossen Anteil an biologisch nicht abbaubaren CSB enthalten..

Es ist bekannt, zur Entfernung gelöster organischer Stoffe Adsorptionsmittel einzusetzen. Die dabei erzielte Verringerung der gelösen organischen Stoffe ist jedoch in der Mehrzahl der Fälle nicht ausreichend, um eine weitergehende Abwasserreinigung ersetzen zu können.

Unter der Bezeichnung "Wasserkreisläufe", wie sie hier verwendet wird, sind innerbetriebliche und äussere Kreisläufe zu verstehen, wie z.B. der Primär-, Sekundär-und Tertiär-Kreislauf in der Papierherstellung. Gemäss der Erfindung ist auch eine Reinigung des Wassers vorgesehen, das der Kläranlage zugeführt wird, wie auch eine Aufbereitung des Restwassers, das der Kläranlage entnommen und eventuell recyclisiert wird.

In den Altpapier-verarbeitenden Papierfabriken ist die Art der Abwasserinhaltsstoffe sehr vielgestaltig: Infolge von Wellpappenabfällen kommt es zu einer Anhäufung von Klebstoffen im Abwasser, die heute weitgehend auf Stärke und CMC basieren. Durch die Oberflächenveredelung gelangen z.B. Latices, Kasein, Gelatine und durch die Papierverarbeitung Druckfarben in das Abwasser. Nicht zuletzt kann verrottetes Altpapier bei schlechter und zu langer Lagerung zu einem hohen CSB beitragen. Bei den genannten Stoffen handelt es sich weitgehend um Makromoleküle, die solvatisiert und deshalb schwer zu flocken sind und ausserdem gegenüber Dispersionskolloiden als Schutzkolloide wirken können.

Im weiteren wurde festgestellt, dass der Mahlprozess einen sehr grossen Einfluss auf den CSB ausübt. In Abhängigkeit von der Mahldauer können CSB-Werte von z.B. 250 auf 1200 mg $O_2$/l steigen. Auch eine Peroxid-oder Hydrosulfit-Bleiche kann zur Erhöhung des CSB beitragen.

Aufgrund der behördlichen Auflagen bemühen sich insbesondere die Papierfabriken zur Zeit sehr intensiv um eine Senkung der spezifischen Abwasserlast ganz allgemein, indem sie den Kreislauf immer mehr schliessen. Damit verbunden ist aber ein Anstieg des CSB innerhalb des Stoffsystems einer Papierfabrik. Die grosse Menge an gelösten organischen Substanzen eine konzentrierte Nährlösung für Mikroorganismen bildet und damit eine wesentliche Ursache für schwerwiegende Probleme, wie Schleimbildung, Geruchsbelästigung und Korrosion. Hohe CSB-Werte werden insbesondere bei der Altpapierverarbeitung einschliesslich dem Deinking-Prozess gemessen.

In der Publikation "Untersuchungen zur Reduzierung des chemischen Sauerstoffverbrauches von Abwässern aus Papierfabriken durch Flockung" von B. Borchers et al in "Zellstoff und Papier", 1977, Heft 10, Seiten 267 ff., wird ein Verfahren unter Zugabe von Aluminiumsulfat und einem organischen Polyelektrolyten beschrieben, wobei die ausgeflockten Störsubstanzen mit Hilfe von Filtration oder Sedimentation entfernt wurden. Dabei hat sich gezeigt, dass beim kombinierten Einsatz von Aluminiumsulfat und einem hochmolekularen Polyacrylamid eine CSB-Reduzierung erzielt wird.

In der Veröffentlichung "Advance treatment of purified sewage for the production of high-brightness pulp and paper" von H.J. Jacobs et al in Tappi, Heft 12, 1973, S. 170-174, wird ein Verfahren unter Verwendung von Alaun und einem Polyelektrolyten und anschliessende Flotation der geflockten Störsubstanzen bschrieben.

H. Roediger beschreibt in "Flotation, eine wichtige Technik zur Stoffrückgewinnung, Abwasserreinigung und Schlammeindickung" in "Korrespondenz Abwasser", 23. Jahrgang, Heft 9, 1976, S. 267-273, u.a. die Anwendung der Entspannungsflotation, wobei nach erfolgter Fällung und Flockung grosse flotierbare Flocken gebildet werden, die auf ihrer Oberfläche weitere Kolloide und sonstige feinste Teilchen aus der Suspension adsorbieren.

Bei der Entspannungs-Flotation wird das Abwasser unter Druck mit Luft gesättigt. Dann wird es in einem offenen Flotationsbecken auf den natürlichen atmosphärischen Druck, also auf 1 bar plus der geringen darüberstehenden Wassersäule entspannt. Dabei werden, auch wenn der anfängliche Überdruck nur wenige bar ausmachte, sehr viel grössere Luftmengen frei als dies z.B. bei der Vakuum-Flotation unter künstlicher Druckabsenkung der Fall ist. Baulich, maschinell und betrieblich ist die Enspannungsflotation sehr viel einfacher und kostengünstiger als die Vakuumflotation.

Aufgabe der vorliegenden Erfindung ist es, ein Verfahren zur Verfügung zu stellen, womit der CSB, insbesondere der biologisch nicht oder - schwer abbaubare CSB, in Wasserkreisläufen, vorzugsweise in internen Wasserkreisläufen der Altpapieraufbereitung, in einfacher und wirtschaftlicher Weise weitgehend reduziert werden kann.

Die vorstehende Aufgabe wird gemäss der Erfindung durch ein Verfahren der eingangs genannten Art gelöst, das dadurch gekennzeichnet ist, dass neben der üblicherweise durchgeführten Flockung von im Kreislaufwasser vorliegenden suspendierten Feststoffteilchen eine Ausfallung von gelösten Störsubstanzen mit Hilfe anorganischer Fällungsmittel in Kombination mit einem kationischen, anionischen, neutralen oder amphoteren Polyelektrolyten vorgenommen wird, und vorzugsweise die ausgefällten und ausgeflockten Störsubstanzen mittels Entspannungsflotation abgetrennt werden.

Das erfindungsgemässe Verfahren ist gleichermassen bei der Reinigung von Wasserkreislaufen bei der Gewinnung und Bearbeitung von Holzschliff geeignet.

Als anorganisches Fällungsmittel eignet sich inbesondere Alaun und/oder $AlCl_3$.

Der erfindungsgemäss verwendete kationische, anionische, neutrale oder amphotere Polyelektrolyt, der ein Flockungshilfsmittel darstellt, wird bevorzugt ausgewählt aus der Gruppe bestehend aus Polyacrylamid, Natrium-polyacrylat, neutralisiertes oder quaternisiertes Poly-N,N-dimethylamino-ethylmethacrylat, Polyacrylat/Polyacrylamid-Copolymer, Polyethylenoxid, Polyethylenimin, Poly-N,N-dimethylamino-methacrylamid.

Unter den vorstehend genannten Polyelektrolyten ist es bevorzugt, einen mit einem möglichst hohen Molekulargewicht zuzugeben. So eignen sich insbesondere Polyacrylamide mit einem Molekulargewicht von 5.000.000 bis 15.000.000, besonders bevorzugt von 8.000.000 bis 12.000.000. Auch bei den anderen Polyelektrolyten ist es bevorzugt, solche in dem angegebenen Molekulargewichtsbereich einzusetzen.

Im weiteren kann ein Adsorptionsmittel zugegeben werden. Als Adsorptionsmittel eignet sich vorzugsweise Bentonit.

Es ist bevorzugt, die Ausfällung bzw. Ausflockung in einem pH-Bereich von 5 bis 8, bevorzugt von 5,5 bis 7, vorzunehmen. Zur Einstelung des pH-Wertes auf den gewünschten pH-Wert eignet sich die Zugabe von Schwefelsäure.

Gemäss der Erfindung werden die ausgefällten und/oder ausgeflockten Störsubstanzen, die sowohl ursprünglich gelöste als auch kolloid dispers vorliegende kontaminierte Stoffe umfassen, vorzugsweise mit Hilfe der Entspannungsflotation abgetrennt.

Gemäss der Erfindung ist es vorgesehen, bei der Entspannungsflotation zunächst einen Überdruck von 4 bis 7 bar anzuwenden, der dann auf den atmosphärischen Druck abgesenkt wird. Durch diese Druckabsendkung bildet sich eine grosse Menge feinster Luftblasen, welche die Bildung grosser Flocken auslösen, wobei auf der Oberfläche derselben feinste Kolloidteilchen sowie Niederschläge absorbiert werden.

Die gebildeten grossen flotierbaren Flocken werden dann durch Flotation aus dem Kreislaufwasser entfernt.

Gemäss der Erfindung ist es vorgesehen, gegebenenfalls vor der Zugabe von anorganischem Fällungsmittel und organischem Polyelektrolyt eine Abtrennung von a priori im Kreislaufwasser vorliegenden Feststoffteilchen vorzunehmen. Diese Abtrennung erfolgt vorzugsweise mit Hilfe eines Sprasyfilters oder durch Klärfiltration.

Nach einem bevorzugten Verfahren gemäss der Erfindung werden die den chemischen Sauerstoffbedarf verursachenden Substanzen nur in einem Ausmass von 20 bis 70 %, vorzugsweise von 30 bis 50%, entfernt.

Es hat sich gezeigt, dass eine Eliminierung von CSB-Substanzen in diesem Bereich verhältnismässig einfach durchzuführen und kostengünstig ist. Bei einer Entfernung von CSB-Substanzen über 80 % hinaus ist es erforderlich, dem Kreislaufwasser oder Abwasser eine erhöhte Menge an Fällungs-bzw. Flockungsmittel zuzugeben, so dass letztere wieder eine Beladung des Abwassers mit Fremdstoffen bewirken.

Das erfindungsgemässe Verfahren eignet sich insbesondere zur Reinigung des Primär-, Sekundär-und/oder des Tertiärkreislaufes in der Papierherstellung. Besonders geeignet ist es zur Reinigung interner Wasserkreisläufe bei der Herstellung von Papier aus Altpapier, wobei die Ausfällung der gelösten kontaminierenden Substanzen vor dem Deinking-Verfahren unmittelbar vor der Flockung suspendierter Feststoffteilchen vorgenommen wird.

Das gemäss dem erfindungsgemässen Verfahren behandelte Kreislaufwasser bzw. Abwasser eignet sich zur Recyclisierung.

**Ansprüche**

1. Verfahren zur Reinigung von Wasserkreisläufen bei der Zellstoff-, Halbstoff-und Papierherstellung, dadurch **gekennzeichnet,** dass neben der üblicherweise durchgeführten Flockung von im Kreislaufwasser vorliegenden suspendierten Feststoffteilchen und deren Abtrennung eine Ausfällung von gelösten Störsubstanzen vorgenommen wird.

2. Verfahren nach Anspruch 1, dadurch **gekennzeichnet,** dass die Ausfällung durch Zugabe von Alaun und/oder AlCl₃ in Kombination mit einem Flockungshilfsmittel erfolgt.

3. Verfahren nach Anspruch 2, dadurch **gekennzeichnet,** dass das Flockungshilfsmittel einen kationischen, anionischen, neutralen oder amphoteren Polyelektrolyten darstellt.

4. Verfahren nach Anspruch 3, dadurch **gekennzeichnet,** dass der Polyelektrolyt Polyacrylamid darstellt.

5. Verfahren nach Anspruch 4, dadurch **gekennzeichnet,** dass das Polyacrylamid ein Molekulargewicht von 5.000.000 bis 15.000.000 aufweist.

6. Verfahren nach Anspruch 4, dadurch **gekennzeichnet,** dass das Polyacrylamid ein Molekulargewicht von 8.000.000 bis 12.000.000 aufweist.

7. Verfahren nach Anspruch 3, dadurch **gekennzeichnet,** dass der Polyelektrolyt Natriumpolyacrylat darstellt.

8. Verfahren nach Anspruch 3, dadurch **gekennzeichnet,** dass der Polyelektrolyt ein neutralisiertes oder quaternisiertes Poly-N,N-dimethylamino-ethylmethacrylat darstellt.

9. Verfahren nach Anspruch 3, dadurch **gekennzeichnet,** dass der Polyelektrolyt ein Polyacrylat/Polyacrylamid-Copolymer darstellt.

10. Verfahren nach Anspruch 3, dadurch **gekennzeichnet,** dass der Polyelektrolyt Polyethylenoxid darstellt.

11. Verfahren nach Anspruch 3, dadurch **gekennzeichnet,** dass der Polyelektrolyt Polyethylenimin darstellt.

12. Verfahren nach Anspruch 3, dadurch **gekennzeichnet,** dass der Polyelektrolyt Poly-N,N-dimethylamino-methacrylamid darstellt.

13. Verfahren nach einem oder mehreren der vorangehenden Ansprüche, dadurch **gekennzeichnet,** dass zur Ausfällung zusätzlich noch Schwefelsäure zugegeben wird.

14. Verfahren nach einem oder mehreren der vorangehenden Ansprüche, dadurch **gekennzeichnet,** dass zur Ausfällung zusätzlich ein Adsorptionsmittel zugegeben wird.

15. Verfahren nach Anspruch 14, dadurch **gekennzeichnet,** dass als Adsorptionsmittel Bentonit verwendet wird.

16. Verfahren nach einem oder mehreren der vorangehenden Ansprüche, dadurch **gekennzeichnet,** dass die Ausfällung im pH-Bereich 5 bis 8 erfolgt.

17. Verfahren nach Anspruch 1, dadurch **gekennzeichnet,** dass die ausgefällten Störsubstanzen zusammen mit den geflockten, suspendierten Feststoffteilchen mittels Entspannungsflotation abgetrennt werden.

18. Verfahren nach Anspruch 1, dadurch **gekennzeichnet,** dass der Ausfallüng eine Abtrennung von Feststoffteilchen vorhergeht.

19. Verfahren nach Anspruch 18, dadurch **gekennzeichnet,** dass die Abtrennung von Feststoffteilchen mit Hilfe eines Sprayfilters oder mittels Klärfiltration erfolgt.

20. Verfahren nach einem oder mehreren der vorangehenden Ansprüche, dadurch **gekennzeichnet,** dass das Abtrennen von Störsubstanzen und suspendierten Feststoffteilchen gewonnene Wasser recyclisiert wird.

21. Verfahren nach einem oder mehreren der vorangehenden Ansprüche, dadurch **gekennzeichnet,** dass die den chemischen Sauerstoffbedarf verursachenden Substanzen (CSB-Substanzen) nur in einem Ausmass von 20 bis 70 % entfernt werden.

22. Verfahren zur Reinigung von internen Wasserkreisläufen bei der Herstellung von Papier aus Altpapier vor der beim Deinking-Verfahren üblicherweise vorgesehenen Flockung von suspendierten Feststoffteilchen und deren Abtrennung eine Ausfallüng von gelösten Störsubstanzen vorgenommen wird.

23. Verfahren nach Anspruch 22, dadurch **gekennzeichnet,** dass die Ausfällung durch Zugabe von Alaun und/oder AlCl₃ in Kombination mit einem Flockungshilfsmittel erfolgt.

24. Verfahren nach Anspruch 23, dadurch **gekennzeichnet,** dass das Flockungshilfsmittel ausgewählt wird aus einem kationischen, anionischen oder neutralen Polyelektrolyten der Gruppe Polyacrylamid, Natriumpolyacrylat, Poly-N,N-dimethylamino-ethylmethacrylat, Polyacrylat/Polyacrylamid-Copolymer, Polyethylenoxid, Polyethylenimin, Poly-N,N-dimethyl-aminomethacrylamid.

25. Verfahren nach Anspruch 24, dadurch **gekennzeichnet,** dass der Polyelektrolyt ein Molekulargewicht im Bereich von 8.000.000 bis 12.000.000 aufweist.

26. Verfahren nach Anspruch 22, dadurch **gekennzeichnet,** dass zur Ausfällung zusätzlich noch Schwefelsäure zugegeben wird.

27. Verfahren nach Anspruch 22, dadurch **gekennzeichnet,** dass zur Ausfällung zusätzlich ein Adsorptionsmittel zugegeben wird.

28 Verfahren nach Anspruch 22, dadurch **gekennzeichnet,** dass als Adsorptionsmittel Bentonit verwendet wird.

29. Verfahren nach Anspruch 22, dadurch **gekennzeichnet,** dass die Ausfällung im pH-Bereich 5 bis 8 erfolgt.

30. Verfahren nach Anspruch 22, dadurch **gekennzeichnet,** dass die ausgefällten Störsubstanzen zusammen mit den ausgeflockten, suspendierten Feststoffteilchen mittels Entspannungsflotation abgetrennt werden.

31. Verfahren nach Anspruch 22, dadurch **gekennzeichnet,** dass das nach Abtrennung von Störsubstanzen und suspendierten Feststoffteilchen gewonnene Wasser recyclisiert wird.

32. Verfahren nach Anspruch 31, dadurch **gekennzeichnet,** dass das rückgewonnene Wasser in der Bleichstufe bzw. auf der Papiermaschine verwendet wird.

33. Verfahren nach Anspruch 22 dadurch **gekennzeichnet,** dass die den chemischen Sauerstoffbedarf verursachenden Substanzen (CSB-Substanzen) nur in einem Ausmass von 20 bis 70 % entfernt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,P | "Lehr- und Handbuch der Abwassertechnik", dritte Auflage, Band 6: "Organisch verschmutzte Abwässer sonstiger Industriegruppen", 1986, Seiten 291-340, Kapitel 5: "Papier- und Zellstoffabriken", Ernst & Sohn, Berlin, DE; * Abschnitt 5.6.3, letzter Absatz; Abschnitt 5.7, vorletzter Absatz - Abschnitt 5.8.1, Seite 329 * | 1,17,20 -22,30, 31,33 | C 02 F 1/52<br>C 02 F 1/56<br>C 02 F 1/24 |
| A | Idem | 3,4,10, 11,15, 24,28 | |
| | --- | | |
| X,D | TAPPI, Band 56, Nr. 12, Dezember 1973, Seiten 170-174, Atlanta, GA., US; H.J. JACOBS et al.: "Advanced treatment of purified sewage for the production of high-brightness pulp and paper" * Seiten 172-174 * | 1-4,16, 22-24, 29 | |
| | --- | | RECHERCHIERTE SACHGEBIETE (Int. Cl.4) |
| X,P | WO-A-8 604 585 (SULZER) * Seite 1, Zeilen 20-21; Seite 2, Zeilen 12-30; Seite 3, Zeilen 11-20, Seite 7, Zeilen 2-6; Seite 9, Zeilen 12-25 * | 1-4,10, 20,22- 24-31, 32 | C 02 F<br>D 21 C |
| | --- | | |
| E | GB-A-2 186 275 (STONE CONTAINER) * Seite 1, Zeilen 34,122-128; Seite 2, Zeilen 5-10 * | 1-4,17, 20-24, 30 | |
| | --- | | |
| A | EP-A-0 151 097 (BOLIDEN) * Seite 2, Zeilen 7-25 * | 1-3,16, 22,23, 29 | |
| | --- -/- | | |

Der vorliegende Recherchenbericht wurde für alle Patentansprüche erstellt

| Recherchenort | Abschlußdatum der Recherche | Prüfer |
|---|---|---|
| DEN HAAG | 25-11-1987 | KASPERS H.M.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P0403)

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | TAPPI, Band 64, Nr. 4, April 1981, Seiten 20,22, Atlanta, GA., US; "Alum is effective effluent coagulant" * Insgesamt * | 1-5,13, 21-26 | |
| A | TAPPI, Band 64, Nr. 3, März 1981, Seiten 181-183, Atlanta, GA., US; J.M. LASSA: "Clay is Mosinee's choice for reducing TSS discharge from clarifier" * Insgesamt * | 14,15, 27,28 | |
| A | GB-A-1 501 099 (HEMLAB) * Seite 3; Ansprüche 1,7-11,19 * | 3-12 | |
| A,D | KORRESPONDENZ ABWASSER, Band 23, Nr. 9, 1976, Seiten 267-273; H. ROEDIGER: "Flotation, eine wichtige Technik zur Stoffrückgewinnung, Abwasserreinigung und Schlammeindickung" * Seite 269, rechte Spalte * | 17,21 | |
| A | NL-A-8 101 706 (NALCO) * Ansprüche 1,2,5,6 * | 1-4,22-24 | RECHERCHIERTE SACHGEBIETE (Int. Cl.4) |

Der vorliegende Recherchenbericht wurde für alle Patentansprüche erstellt

| Recherchenort | Abschlußdatum der Recherche | Prüfer |
|---|---|---|
| DEN HAAG | 25-11-1987 | KASPERS H.M.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

    ......................................................................
& : Mitglied der gleichen Patentfamilie, übereinstimmendes Dokument

EPO FORM 1503 03.82 (P0403)